Europäisches Patentamt

**European Patent Office**

Office européen des brevets

(11) Numéro de publication: **0 117 208**
A1

(12) **DEMANDE DE BREVET EUROPEEN**

(21) Numéro de dépôt: **84400327.7**

(51) Int. Cl.³: **F 16 K 17/10**

(22) Date de dépôt: **16.02.84**

(30) Priorité: **17.02.83 FR 8302575**
**17.06.83 FR 8310024**

(43) Date de publication de la demande:
**29.08.84 Bulletin 84/35**

(84) Etats contractants désignés:
**BE CH DE FR GB IT LI SE**

(71) Demandeur: **COMPAGNIE PARISIENNE D'OUTILLAGE A AIR COMPRIME Société anonyme dite:**
**Zone Industrielle des Fourmis**
**F-74130 Bonneville(FR)**

(72) Inventeur: **Bouveret, Claude**
**409, square Jacques Prévert**
**7-91000 Evry(FR)**

(74) Mandataire: **Weinmiller, Jürgen et al,**
**Zeppelinstrasse 63**
**D-8000 München 80(DE)**

(54) Servolimiteur hydraulique de pression.

(57) Elle a pour objet un servolimiteur hydraulique de pression du type comportant un ensemble d'obturation (79, 80, 75) pouvant obturer une canalisation (76) en dérivation entre la source de pression hydraulique (P) et la pression atmosphérique (T) d'une bâche de retour, caractérisé en ce qu'il comprend des moyens pour assurer à au moins une partie dudit ensemble d'obturation un mouvement d'amplitude proportionnelle à la valeur angulaire de rotation de l'arbre d'un ensemble moteur numérique (90).

Application à la robotique.

FIG.3

Servolimiteur hydraulique de pression.

La présente invention concerne un servolimiteur hydraulique de pression.

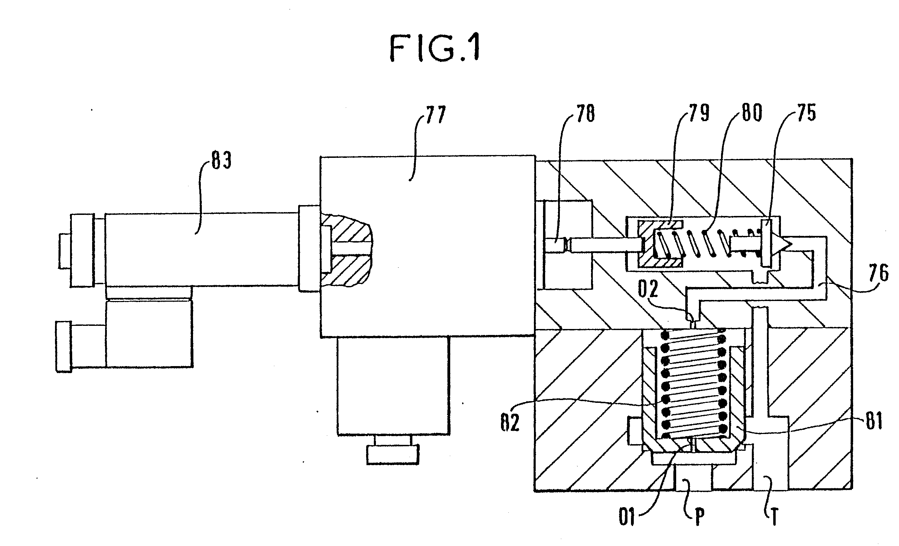

Le figure 1 représente un servolimiteur de pression de type connu comportant un pointeau 75 fermant un conduit hydraulique 76 en dérivation sur un circuit hydraulique entre la source hydraulique de pression P et la pression atmosphérique de la bâche T.

Le pointeau est appliqué sur son siège par un électro-aimant 77 dont le noyau mobile 78 pousse un manchon 79 portant un ressort 80. Un piston 81 associé à un ressort 82 assure par compensation de pertes de charge à travers les orifices calibrés 01 et 02 la fonction de limitation de pression de l'appareil. Dans un tel appareil, la force exercée sur le manchon est une fonction de l'intensité du courant dans l'électro-aimant. On règle ainsi la pression limite au-delà de laquelle le pointeau décolle de son siège et laisse passer un certain débit de fluide, régulant ainsi par l'intermédiaire du compensateur 81 lié au ressort 82, la pression dudit circuit. Un tel appareil manque à la fois de précision et de fidélité en raison de l'hystérésis des ressorts mais surtout des rémanences mal contrôlées du circuit magnétique.

Un contrôleur de position 83, rebouclé sur l'électro-aimant améliore la précision mais est sans effet sur la fidélité et augmente l'encombrement.

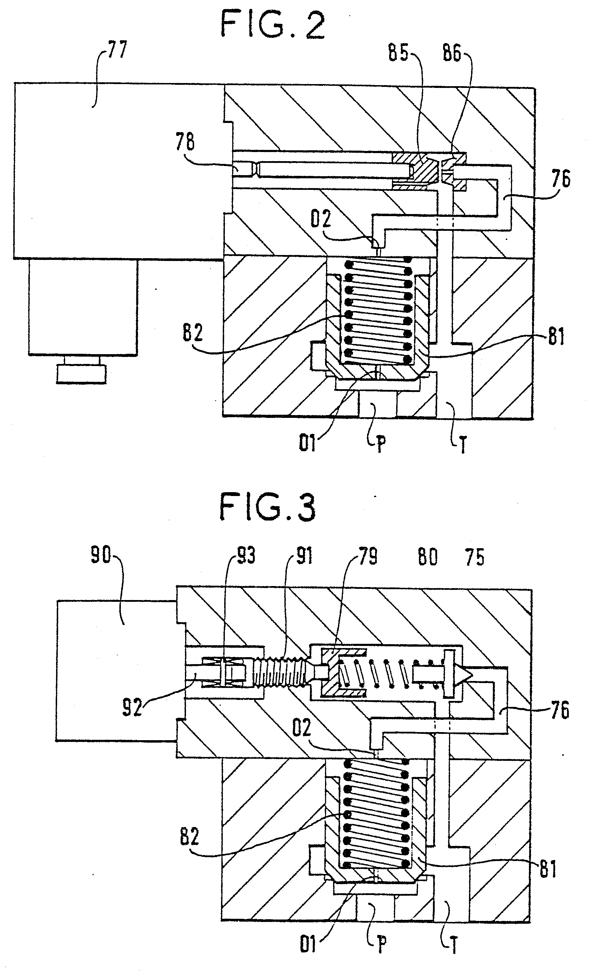

La figure 2 montre une variante connue de servolimiteur de pression dans laquelle l'ensemble pointeau, ressort, manchon est remplacé par un obturateur 85 déplacé par la tige de l'électro-aimant en face d'une buse 86 placée sur le conduit 76. Ce dispositif utilise en fait comme principe de fonctionnement le fait que la force de l'électroaimant est directement applicable par l'obturateur 85 sur l'orifice de la buse 86, définissant ainsi une pression d'équilibre de la force de l'électroaimant assurant par la fuite ainsi créée à travers la buse 86 une position du compensateur 81 directement liée à la fuite de régulation à travers les orifices 01 et 02, assurant de ce fait la limitation de pression. Ce dispositif présente les mêmes inconvénients que celui de la figure 1.

Un but de l'invention est de réaliser un servolimiteur de pression ne présentant pas les inconvénients anoncés ci-dessus.

L'invention a pour objet un servolimiteur de pression hydraulique du type comportant un ensemble d'obturation, pouvant obturer une canalisation en dérivation entre la source de pression hydraulique et la pression atmosphérique d'une bâche de retour, caractérisé en ce qu'il comprend des moyens pour assurer à au moins une partie dudit ensemble d'obturation un mouvement d'amplitude proportionnelle à la valeur angulaire de rotation de l'arbre d'un ensemble moteur numérique, définissant ainsi un réglage proportionnel de la pression d'un circuit.

L'invention sera bien comprise par la description ci-après de divers modes de réalisation de l'invention, en référence au dessin annexé dans lequel :

- Les figures 1 et 2 représentent des servolimiteurs de pression hydraulique selon l'art connu.

- Les figures 3, 4 et 5 représentent des servolimiteurs de pression selon trois modes de réalisation de l'invention.

- La figure 4A représente, agrandi, le détail A de la figure 10.

Le servolimiteur de pression représenté dans la figure 3 comporte, conformément à l'invention, en lieu et place de l'électro-aimant de l'appareil de la figure 1, un moteur numérique 90. Le manchon porte-ressort 79 est lié à une partie filetée 91 qui se visse dans un alésage taraudé du corps de l'appareil. Cette partie filetée est liée à l'arbre 92 du moteur par un accouplement 93 qui laisse la partie 91 libre en translation mais assujettie en rotation. Le reste du dispositif est identique à celui de la figure 1.

Le servolimiteur selon l'invention permet de régler la force du ressort, donc la valeur limite de pression par une simple rotation d'un angle donné du moteur numérique; On obtient ainsi une fidélité de l'appareil, un moindre coût de réalisation et un encombrement plus faible.

Le servolimiteur de la figure 3 est à commande directe du manchon porte-ressort.

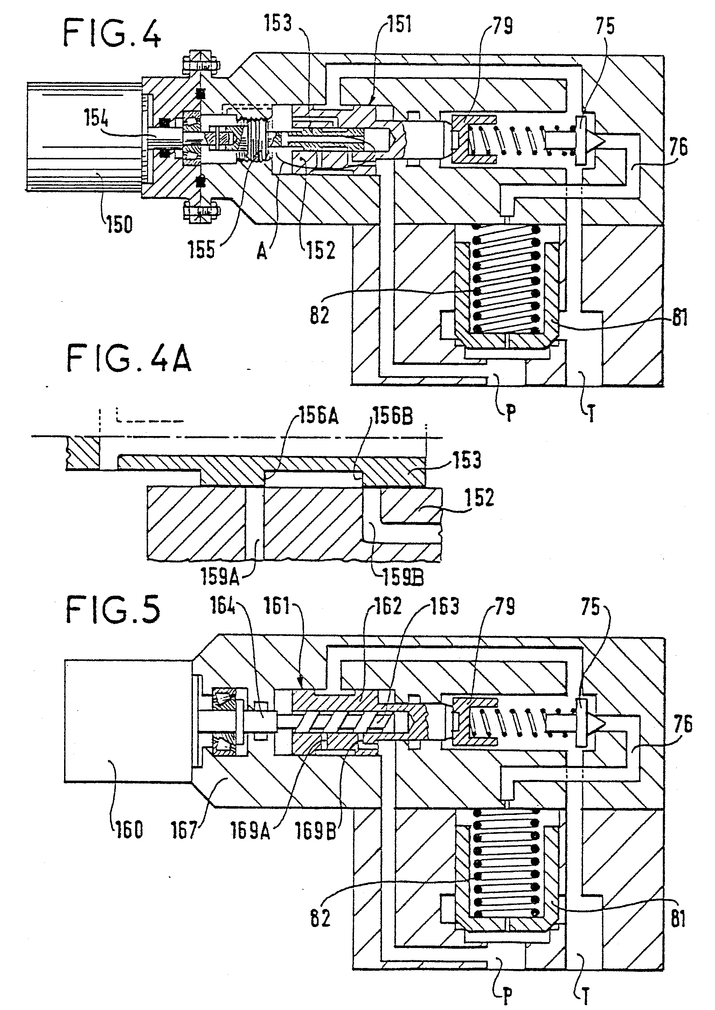

La figure 4 représente un servolimiteur de pression dans lequel le manchon porte-ressort 79 est déplacé par rotation d'un moteur numérique 150 par l'intermédiaire d'un micro-pilote hydraulique 151 comprenant un piston 152 dans lequel peut coulisser un micro-tiroir 153 lié en rotation (et non en translation) à l'arbre du moteur numérique 150. Le tiroir est solidaire d'une partie filetée 155, celle-ci étant liée en rotation, mais pas en translation, à l'arbre 154 du moteur 150. Le micro-tiroir possède deux arêtes 156A, 156B (figure 4A) disposés en face de conduits 159A, 159B pratiqués dans le piston 152 et reliés respectivement à la pression P d'une source hydraulique et à la pression atmosphérique T d'une bâche.

La figure 5 représente un servolimiteur de pression dans lequel le manchon porte ressort 79 est déplacé par rotation d'un moteur numérique 160, par l'intermédiaire d'un micro-pilote hydraulique comprenant un micro-tiroir 162 lié en rotation à l'arbre du moteur numérique. Le micro-pilote, à commande par vis-tiroir 163. Les filets de la vis ouvrent et ferment des canalisations 169A et 169B du micro-tiroir 162, reliées à la pression P d'une source hydraulique et à la pression atmosphérique T d'une bâche, selon le sens de rotation de la vis.

On voit immédiatement l'avantage de ce dispositif qui sont :

- une très faible puissance d'entrée (c'est un amplificateur de puissance)

- très grande précision associée à une grande fidélité (la puissance de commande est telle que tout hystérésis dûe aux écoulements hydrodynamique ou au collage hydraulique devient inopérant)

- encombrement très réduit

- grande fiabilité du fait d'une conception dans lequel n'interviennent pas des orifices calibrés de petite dimension

- une précision de position du tiroir liée d'une part au pas de la vis du micro-tiroir et d'autre part au nombre d'impulsions par tour du moteur de commande qui fait que l'on peut raisonnablement envisager des déplacements du tiroir de l'ordre de 0,002 mm par impulsions.

REVENDICATIONS

1/ Servolimiteur hydraulique de pression du type comportant un ensemble d'obturation (79, 80, 75) pouvant obturer une canalisation (76) en dérivation entre la source de pression hydraulique (P) et la pression atmosphérique (T) d'une bâche de retour, caractérisé en ce qu'il comprend des moyens pour assurer à au moins une partie dudit ensemble d'obturation un mouvement d'amplitude proportionnelle à la valeur angulaire de rotation de l'arbre d'un ensemble moteur numérique (90).

2/ Servolimiteur selon la revendication 1, caractérisé en ce que l'ensemble moteur numérique (90) est choisi parmi les moteurs pas à pas et les moteurs à courant continu associés à un codeur numérique

3/ Servolimiteur selon l'une des revendications 1 et 2, caractérisé en ce que les moyens pour assurer la translation de ladite partie (79) de l'ensemble d'obturation comprennent un organe d'accouplement (93) entre l'arbre de l'ensemble moteur, et ladite partie de l'ensemble d'obturation (79, 80, 75) assujettissant l'arbre et ladite partie en rotation et le laissant libre en translation, ledit organe d'obturation étant solidaire d'une tige filetée (91) se vissant dans un taraudage dudit corps, définissant ainsi la précision incrémentale de déplacement du système.

4/ Servolimiteur selon l'une revendications 1 et 2, caractérisé en ce que ladite partie (79) de l'ensemble d'obturation est solidaire en translation d'un piston (152) d'un micro-pilote hydraulique (151) qui comprend en outre un micro-tiroir de distribution (153) coulissant à l'intérieur dudit piston ledit micro-tiroir possédant des arêtes de pilotage (156A, 156B), ledit micro-tiroir étant lié en rotation à l'arbre (154) de l'ensemble moteur, de manière à être entraîné en rotation, mais rester libre en translation, ledit micro-tiroir possédant une tige filetée (155) se vissant dans une partie fixe du micro-pilote, de manière à se déplacer en translation lorsqu'il est entraîné en rotation.

4/ Servolimiteur selon l'une des revendications 1 et 2, caractérisé en ce que ladite partie (79) de l'ensemble d'obturation est solidaire d'un piston (162) d'un micro-pilote (161) hydraulique, ledit micro-pilote comportant une vis de commande (162) assurant l'alimentation hydraulique du micro-pilote, coulissant dans une cavité dudit piston, ladite vis

0117208

étant liée en rotation avec l'arbre de l'ensemble moteur (160).

6/ Servolimiteur selon l'une des revendications 3, 4 et 5, caractérisé en ce que l'organe d'obturation est un pointeau (75) appliqué sur son siège par l'intermédiaire d'un ressort (80) maintenu par un manchon coulissant (79) constituant ladite partie de l'ensemble d'obturation.

# FIG.1

## FIG. 2

## FIG.3

0117208

FIG.4

FIG.4A

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-2 095 372 (TOKYO) <br> * Page 1, lignes 10-29 * | 1-3,6 | F 16 K 17/10 |
| X | GB-A-2 002 880 (IDRA) <br> * En entier * | 1-3,6 | |
| P,X | EP-A-0 088 017 (COMP. PARISIENNE D'OUTILLAGE A AIR COOMPRIME) <br> * En entier * | 4,5 | |
| | | | **DOMAINES TECHNIQUES RECHERCHES (Int. Cl. ³)** |
| | | | F 15 B <br> F 16 K |

Le présent rapport de recherche a été établi pour toutes les revendications

| Lieu de la recherche <br> LA HAYE | Date d'achèvement de la recherche <br> 25-04-1984 | Examinateur <br> KNOPS J. |
|---|---|---|